# EUROPEAN PATENT SPECIFICATION

(11) **EP 3 306 208 B1**
(45) Date of publication and mention of the grant of the patent: **28.02.2024**
(21) Application number: 15894121.1
(22) Date of filing: 29.05.2015
(51) Int. Cl.: F28D 21/00, F24F 7/08, F24F 3/00, F24F 12/00, F24F 13/30, F24F 13/20, F28F 9/00, F28F 9/007, F28D 9/00

(54) **HEAT EXCHANGE VENTILATION DEVICE**
WÄRMETAUSCH-BELÜFTUNGSVORRICHTUNG
DISPOSITIF DE VENTILATION À ÉCHANGE DE CHALEUR

(43) Date of publication of application: 11.04.2018
(73) Proprietor: Mitsubishi Electric Corporation, Chiyoda-ku Tokyo 100-8310 (JP)
(72) Inventor: FUJII, Yoshinori, Tokyo 102-0073 (JP); AOKI, Hiroki, Tokyo 100-8310 (JP); MIYAZAKI, Yuki, Tokyo 100-8310 (JP); KATO, Shinya, Tokyo 102-0073 (JP)
(74) Representative: Mewburn Ellis LLP
(86) International application number: PCT/JP2015/065678
(87) International publication number: WO 2016/194086

(56) References cited:
- EP-A1- 2 426 425
- WO-A1-2010/125633
- WO-A1-2010/125633
- FR-A1- 2 864 607
- JP-A- H05 248 782
- JP-A- H07 293 960
- JP-A- H09 195 397
- JP-A- 2003 074 936
- JP-U- S5 348 461

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between air passing through the supply air path and air passing through the discharge air path.

The heat exchanger used in such a heat-exchange type ventilation apparatus includes a heat exchange element that includes a plurality of heat exchange plates, which are sheet-like partition plates, stacked together with spacing therebetween. Patent Literature 1 discloses a heat exchange element having a cuboid shape due to the heat exchange plates each having a rectangular shape.

### Citation List

### Patent Literature

Patent Literature 1: Japanese Patent No. 3305561

WO 2010/125 633 A1 describes a casing for an air supply fan is divided into a first casing and a second casing, and a casing for an air discharge fan is divided into a third casing and a fourth casing. The first casing and the third casing have the same shape and so do the second casing and the fourth casing. A first projection provided to the second casing and a second projection provided to the fourth casing are superposed over each other with opposed main surfaces of the second and fourth casings in surface contact with each other.

### Summary

### Technical Problem

In the main body of the heat-exchange type ventilation apparatus, the heat exchanger abuts on the main body. Abutting portions of the heat exchanger and the main body are boundary portions between the supply air path and the discharge air path in the main body. In order to prevent air passing through these paths from mixing with each other, the abutting portions of the heat exchanger and the main body are required to have airtightness to prevent air from leaking from one of the paths to the other. In particular, a configuration that maintains airtightness even when the heat exchange element has contracted due to changes over time is required.

The present invention has been achieved in view of the above, and an object of the present invention is to provide a heat-exchange type ventilation apparatus that can improve airtightness between a heat exchanger and a main body.

### Solution to Problem

In order to solve the above problems and achieve the object, the present invention provides a heat-exchange type ventilation apparatus according to claim 1.

### Advantageous Effects of Invention

A heat-exchange type ventilation apparatus according to the present invention produces an effect of enabling an improvement in airtightness between a heat exchanger and a main body.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is an exploded perspective view of an air supplying fan and an air discharging fan in the heat-exchange type ventilation apparatus according to the first embodiment.
FIG. 9 is a partially enlarged cross-sectional view of a portion D illustrated in FIG. 4.

### Description of Embodiments

A heat-exchange type ventilation apparatus according to embodiments of the present invention will now be described in detail with reference to the drawings. The present invention is not limited to the embodiments and is defined in the claims.

### First embodiment.

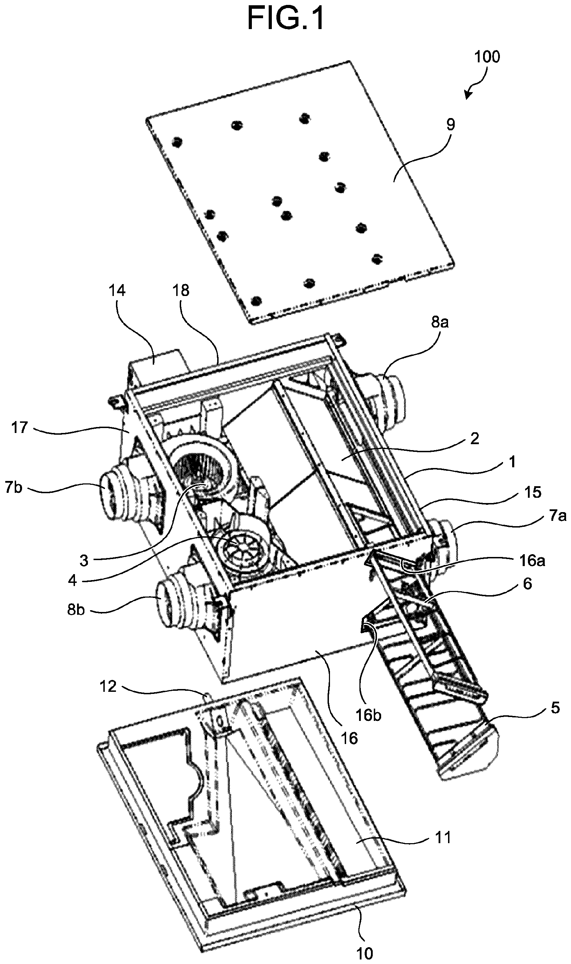

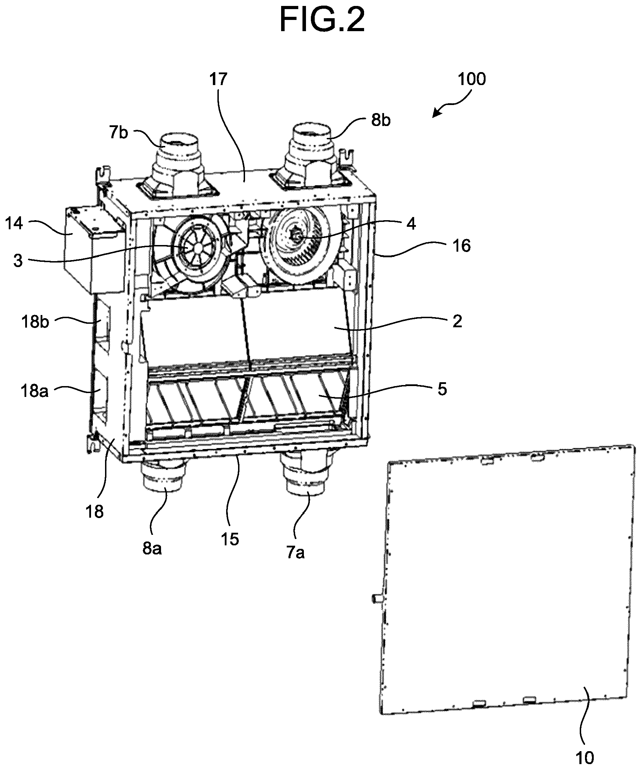

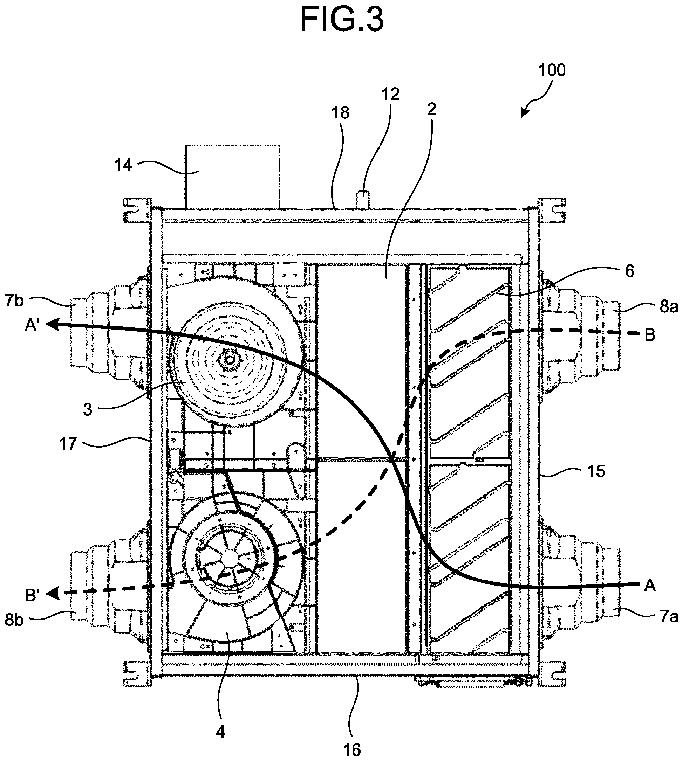

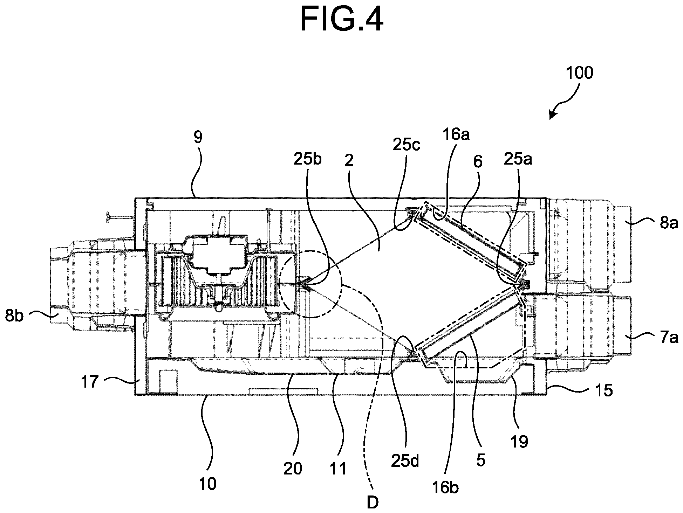

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes outside air (supply air) that is admitted through the exterior-side inlet portion 7a into the supply air path to flow out through the interior-side outlet portion 7b.

The air discharging fan 4 is placed in the discharge air path. The air discharging fan 4 generates a discharge airflow that causes inside air (discharge air) that is admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'. The air supplying fan 3 and the air discharging fan 4 are disposed downstream of the heat exchanger 2 in their respective paths.

A control circuit 14 is attached to the side plate 18. The side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. By discharging without going through the heat exchanger 2, it is possible to reduce the pressure loss needed for the air to pass through the heat exchanger 2 although heat exchange is not performed. In this manner, the load on the air discharging fan 4 can be reduced and thereby the power consumption can be reduced. The side plate 16, which is opposite the side plate 18, has openings 16a and 16b, which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

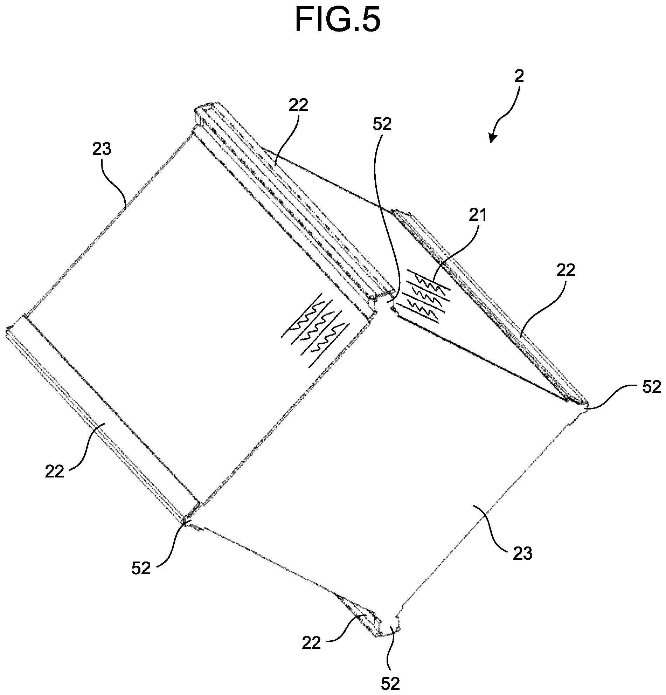

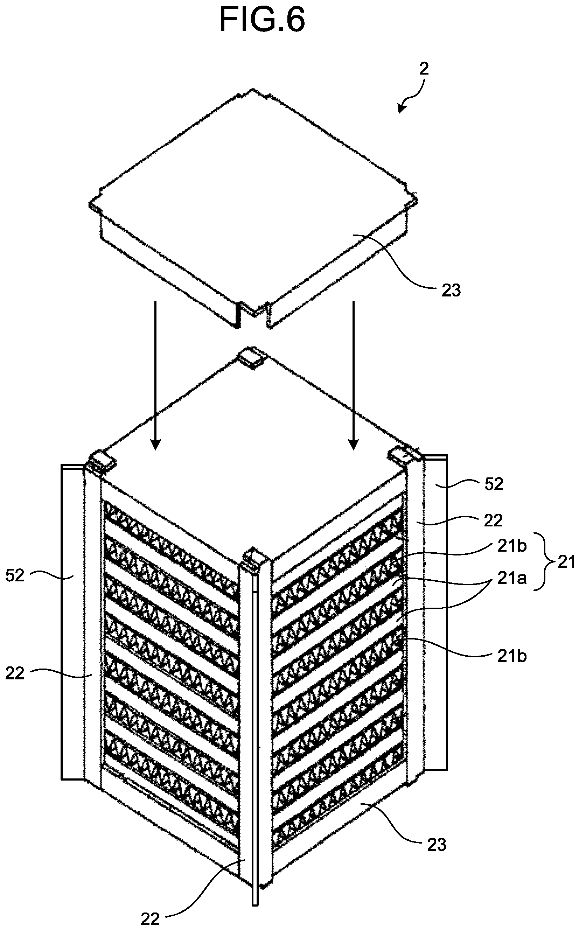

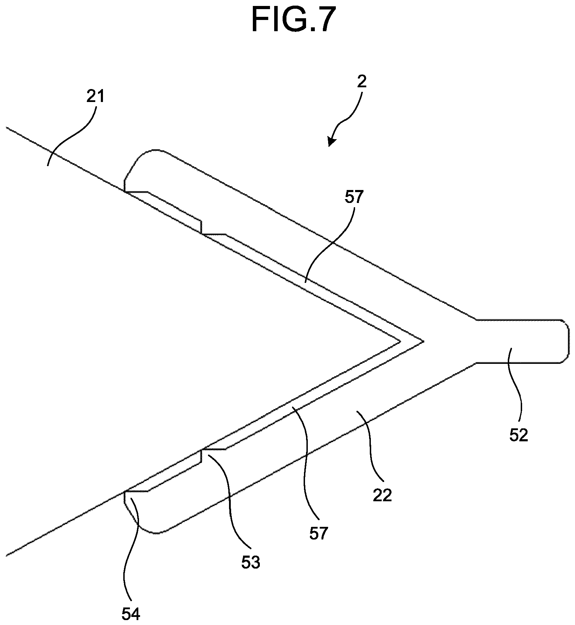

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the present embodiment, the partition members 21a and the spacing members 21b have a square shape as viewed from the stacking direction of the partition members 21a, and thus, the heat exchange element 21 formed by stacking these members has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the edges of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

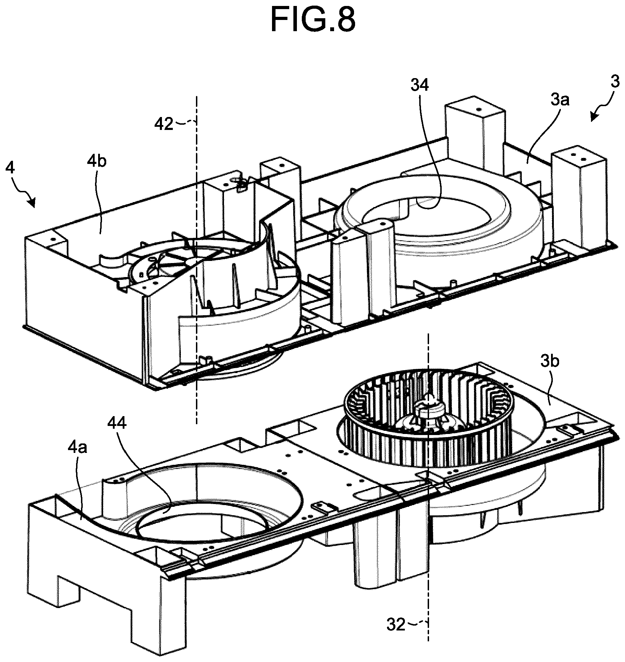

Of the support recess portions 25a to 25d, the support recess portion 25b, which is placed on the side of the air supplying fan 3 and the air discharging fan 4, is formed at the air supplying fan 3 and the air discharging fan 4. FIG. 8 is an exploded perspective view of the air supplying fan 3 and the air discharging fan 4 in the heat-exchange type ventilation apparatus 100 according to the first embodiment.

A casing 31 of the air supplying fan 3 includes an inlet-side casing 3a, which is a first casing, and a motor casing 3b, which is a second casing, and the inlet-side casing 3a and the motor casing 3b can be split from each other in a direction along a rotation axis 32 of a motor (not illustrated) at a splitting plane that is orthogonal to the rotation axis 32. The casing 31 is configured by combining the inlet-side casing 3a and the motor casing 3b. The inlet-side casing 3a includes an inlet portion 34 formed therein.

A casing 41 of the air discharging fan 4 includes an inlet-side casing 4a, which is a first casing, and a motor casing 4b, which is a second casing, and the inlet-side casing 4a and the motor casing 4b can be split from each other in a direction along a rotation axis 42 of a motor (not illustrated) at a splitting plane that is orthogonal to the rotation axis 42. The casing 41 is configured by combining the inlet-side casing 4a and the motor casing 4b. The inlet-side casing 4a includes an inlet portion 44 formed therein.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

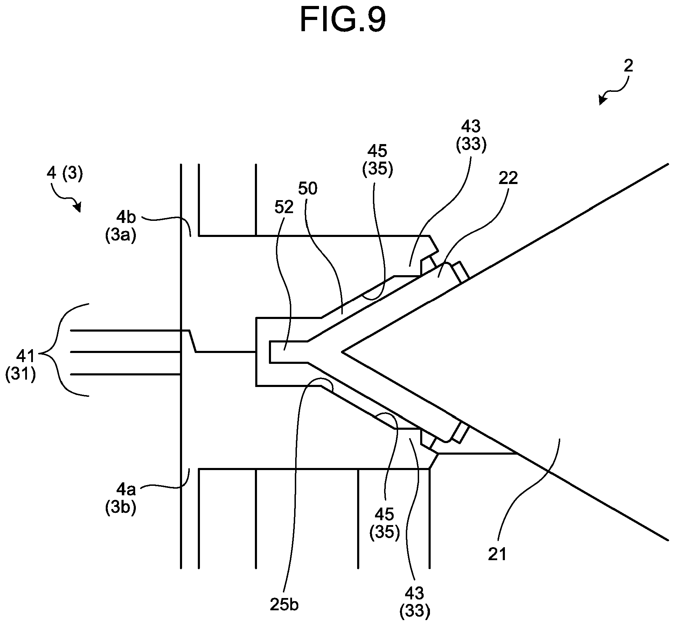

FIG. 9 is a partially enlarged cross-sectional view of a portion D illustrated in FIG. 4. The splitting plane between the inlet-side casing 4a and the motor casing 4b of the casing 41 of the air discharging fan 4 abuts on one of the edges of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. The inlet-side casing 4a and the motor casing 4b have inclined surfaces 45 that face each other at the splitting plane. The support recess portion 25b is formed by the inclined surfaces 45, which face each other, by combining the inlet-side casing 4a and the motor casing 4b. The support recess portion 25b, which is formed by the inclined surfaces 45, is a V-shaped groove forming an angle less than 180°. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the edges of the heat exchanger 2 that extend in the stacking direction. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove forming an angle less than 180°. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. A cushioning material 50 is interposed between the support recess portion 25b and the frame member 22.

One of the frame members 22 and the corresponding one of the outer protrusions 52 are also fitted in each of the support recess portions 25a, 25c, and 25d, although detailed illustration is omitted. The support recess portions 25a, 25c, and 25d also have protrusions extending in the stacking direction formed on their respective inner wall surfaces. The cushioning material 50 is interposed between each of the support recess portions 25a, 25c, and 25d and the corresponding one of the frame members 22.

In the heat-exchange type ventilation apparatus 100 described above, the fitting structure in which the outer protrusions 52 of the frame members 22 are fitted in the support recess portions 25a to 25d can achieve an improvement in airtightness between the heat exchanger 2 and the housing 1. Additionally, the protrusions 33 and 43, which are formed on the inner wall surfaces of the support recess portions 25a to 25d, are in line contact with the cushioning materials 50; thus, this is less likely to form a gap than a case in which the inner wall surfaces of the support recess portions 25a to 25d are in surface contact with the cushioning materials 50, and thereby airtightness can be improved.

Even when a gap between any one of the inner wall surfaces of the support recess portions 25a to 25d and the corresponding one of the frame members 22 increases due to the contraction of the heat exchanger 2 because of deterioration over time, an assembly error, or a manufacturing error, the airtightness can be maintained as long as the protrusions 33 and 43 are in contact with the cushioning materials 50; thus, even when a gap between any one of the inner wall surfaces of the support recess portions 25a to 25d and the corresponding one of the frame members 22 increases due to the contraction of the heat exchanger 2 because of deterioration over time, an assembly error, or a manufacturing error, the airtightness is likely to be maintained.

Furthermore, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Note that the configurations described in the foregoing embodiments are examples of the present invention; combining the present invention with other publicly known techniques is possible, and partial omissions and modifications are possible without departing from the scope of the present invention as defined in the claims.

### Reference Signs List

1 housing (main body), 2 heat exchanger, 3 air supplying fan, 3a inlet-side casing (first casing), 3b motor casing (second casing), 4 air discharging fan, 4a inlet-side casing (first casing), 4b motor casing (second casing), 5 supply air filter, 6 discharge air filter, 7a exterior-side inlet portion, 7b interior-side outlet portion, 8a interior-side inlet portion, 8b exterior-side outlet portion, 9 top plate, 10 bottom plate, 11 drain pan, 15 to 18 side plate, 16a, 16b opening (insertion aperture), 19 supply-air-side drain pan, 20 discharge-air-side drain pan, 21 heat exchange element, 21a partition member, 21b spacing member, 22 frame member, 23 end face member, 25a to 25d support recess portion, 31 casing, 32 rotation axis, 33 protrusion, 34 inlet portion, 35 inclined surface, 41 casing, 42 rotation axis, 43 protrusion, 44 inlet portion, 45 inclined surface, 50 cushioning material, 52 outer protrusion, 53, 54 inner protrusion, 57 seal material, 100 heat-exchange type ventilation apparatus.

## Claims

1. A heat-exchange type ventilation apparatus (100), comprising:
a main body (1) in which a supply air path and a discharge air path are formed, the supply air path comprising an exterior inlet portion (7a) to admit outside air and an interior outlet portion (7b) to discharge the outside air, the discharge air path comprising an interior inlet portion (8a) to admit inside air and an exterior outlet portion (8b) to discharge the inside air;
an air supplying fan (3) placed in the supply air path;
an air discharging fan (4) placed in the discharge air path; and
a heat exchanger (2) placed in the main body (1) to allow heat exchange between air passing through the supply air path and air passing through the discharge air path, wherein
the main body (1), which is a housing, comprises support recess portions (25a, 25b, 25c, 25d) formed therein to support the heat exchanger (2);
the heat exchanger (2) includes a heat exchange element (21), frame members (22) and end face members (23), the heat exchange element (21) comprising a plurality of partition members (21a) each having a sheet-like and polygonal shape, the partition members (21a) being stacked with spacing between the partition members (21a), wherein the support recess portions (25a, 25b, 25c, 25d) are grooves that extend in the stacking direction of the partition members (21a) as placed in the housing (1);
the air supplying fan (3) and the air discharging fan (4) are placed next to each other in the main body (1) in a stacking direction of the partition members (21a) and abut on an edge of the heat exchanger (2), the edge extending in the stacking direction,
a first support recess portion (25b) is formed in an abutting portion where the air supplying fan (3) and the air discharging fan (4) abut on the heat exchanger (2), **characterized in that**
said first support recess portion (25b) includes protrusions (33, 43) extending in the stacking direction and being formed on the respective inner wall surfaces of the first support recess portion (25b),
wherein each of the frame members (22) has an L-like shape in a section and faces two of the side surfaces of the heat exchange element (21) that extend from the edges of the heat exchange element (21),
wherein the surface of each frame member (22) opposite the surface thereof that faces the heat exchange element (21) has an outer protrusion (52) formed thereon that extends in the stacking direction,
wherein each frame member (22) covers an edge of the heat exchange element (21), each edge extending in the stacking direction,
wherein each frame member (22) and a corresponding one of the outer protrusions (52) is fitted in a corresponding one of the support recess portions (25a, 25b, 25c, 25d), and
cushioning material (50),
wherein the cushioning material (50) is interposed between each of the support recess portions (25a, 25b, 25c, 25d) and the corresponding one of the frame members (22), and
wherein the protrusions (33, 43) are in line contact with the cushioning material (50).

2. The heat-exchange type ventilation apparatus (100) according to claim 1, wherein the air supplying fan (3) and the air discharging fan (4) include casings (31, 41) each capable of being split at said first support recess portion (25b) as a center.

3. The heat-exchange type ventilation apparatus (100) according to claim 2, wherein
each of the casings (31, 41) is capable of being split into a first casing (3a, 4a) that includes an inlet portion (34, 44) and a second casing (3b, 4b) to be combined with the first casing (3a, 4a),
the first casing (3a) of the air supplying fan (3) and the first casing (4a) of the air discharging fan (4) have an identical shape, and
the second casing (3b) of the air supplying fan (3) and the second casing (4b) of the air discharging fan (4) have an identical shape.

4. The heat-exchange type ventilation apparatus (100) according to claim 1, wherein
an inner protrusion (54) extending in the stacking direction is formed on the surface of each frame member (22) facing the heat exchange element (21),
the inner protrusion (54) is formed at an end portion of each frame member (22),
wherein two inner protrusions are formed on each frame member (22), and
the inner protrusions (54) abut on the side surfaces of the heat exchange element (21) or dig into the side surfaces of the heat exchange element (21).

5. The heat-exchange type ventilation apparatus (100) according to claim 1, wherein the heat exchanger (2) is supported with the outer protrusion (52) fitted in the said first support recess portion (25b).

## Patentansprüche

1. Belüftungsvorrichtung (100) vom Wärmetauscher-Typ, die Folgendes umfasst:
einen Hauptkörper (1), in dem ein Zuluftpfad und ein Abluftpfad ausgebildet sind, wobei der Zuluftpfad einen äußeren Einlassabschnitt (7a) zum Aufnehmen von Außenluft und einen inneren Auslassabschnitt (7b) zum Abgeben der Außenluft umfasst, wobei der Abluftpfad einen inneren Einlassabschnitt (8a) zum Aufnehmen von Innenluft und einen äußeren Auslassabschnitt (8b) zum Abgeben der Innenluft umfasst;
ein Luftzufuhrgebläse (3), das auf dem Zuluftpfad angeordnet ist;
ein Luftabgabegebläse (4), das auf dem Abluftpfad angeordnet ist; und
einen Wärmetauscher (2), der im Hauptkörper (1) angeordnet ist, um einen Wärmeaustausch zwischen Luft, die über den Zuluftpfad verläuft, und Luft, die über den Abluftpfad verläuft, zu ermöglichen, wobei
der Hauptkörper (1), der ein Gehäuse ist, Tragaussparungsabschnitte (25a, 25b, 25c, 25d) umfasst, die darin ausgebildet sind, um den Wärmetauscher (2) zu tragen;
wobei der Wärmetauscher (2) ein Wärmetauscherelement (21), Rahmenelemente (22) und Endflächenelemente (23) umfasst, wobei das Wärmetauscherelement (21) eine Vielzahl von Trennelementen (21a) umfasst, die jeweils eine plattenförmige und polygonale Form aufweisen, wobei die Trennelemente (21a) mit einer Beabstandung zwischen den Trennelementen (21a) aufeinander gestapelt sind, wobei die Tragaussparungsabschnitte (25a, 25b, 25c, 25d) Vertiefungen sind, die sich in Stapelrichtung der Trennelemente (21a), wenn sie im Gehäuse (1) platziert sind, erstrecken;
wobei das Luftzufuhrgebläse (3) und das Luftabgabegebläse (4) im Hauptkörper in Stapelrichtung der Trennelemente (21a) nebeneinander platziert sind und an einer Kante des Wärmetauschers (2) anliegen, wobei sich die Kante in Stapelrichtung erstreckt,
wobei ein erster Tragaussparungsabschnitt (25b) in einem Anliegeabschnitt, in dem das Luftzufuhrgebläse (3) und das Luftabgabegebläse (4) am Wärmetauscher (2) anliegen, ausgebildet ist,
**dadurch gekennzeichnet, dass**
der erste Tragaussparungsabschnitt (25b) Vorsprünge (33, 43) umfasst, die sich in Stapelrichtung erstrecken und auf den entsprechenden Innenwandflächen des ersten Tragaussparungsabschnitts (25b) ausgebildet sind,
wobei jedes der Rahmenelemente (22) eine L-Form im Querschnitt aufweist und zweien der Seitenflächen des Wärmetauscherelements (21), die sich von den Kanten des Wärmetauscherelements (21) weg erstrecken, zugewandt ist,
wobei die Oberfläche jedes Rahmenelements (22) entgegengesetzt zu jener Oberfläche desselben, die dem Wärmetauscherelement (21) zugewandt ist, einen darauf ausgebildeten Außenvorsprung (52) aufweist, der sich in Stapelrichtung erstreckt,
wobei jedes Rahmenelement (22) eine Kante des Wärmetauscherelements (21) bedeckt, wobei sich jede Kante in Stapelrichtung erstreckt,
wobei jedes Rahmenelement (22) und ein entsprechender aus den Außenvorsprüngen (52) in einen entsprechenden aus den Tragaussparungsabschnitten (25a, 25b, 25c, 25d) eingepasst ist, und
Polsterungsmaterial (50),
wobei das Polsterungsmaterial (50) zwischen jedem aus den Tragaussparungsabschnitten (25a, 25b, 25c, 25d) und dem entsprechenden aus den Rahmenelementen (22) angeordnet ist und
wobei die Vorsprünge (33, 43) in Linienkontakt mit dem Auskleidungsmaterial (50) stehen.

2. Belüftungsvorrichtung (100) vom Wärmetauscher-Typ nach Anspruch 1, wobei das Luftzufuhrgebläse (3) und das Luftabgabegebläse (4) Verkleidungen (31, 41) umfassen, die jeweils in der Lage sind, am ersten Tragaussparungsabschnitt (25b) als ein Mittelpunkt geteilt zu werden.

3. Belüftungsvorrichtung (100) vom Wärmetauscher-Typ nach Anspruch 2, wobei
jede der Verkleidungen (31, 41) in der Lage ist, in eine erste Verkleidung (3a, 4a), die einen Einlassabschnitt (34, 44) umfasst, und eine zweite Verkleidung (3b, 4b), die mit der ersten Verkleidung (3a, 4a) zu kombinieren ist, geteilt zu werden,
wobei die erste Verkleidung (3a) des Luftzufuhrgebläses (3) und die erste Verkleidung (4a) des Luftabgabegebläses (4) eine identische Form aufweisen und
die zweite Verkleidung (3b) des Luftzufuhrgebläses (3) und die zweite Verkleidung (4b) des Luftabgabegebläses (4) eine identische Form aufweisen.

4. Belüftungsvorrichtung (100) vom Wärmetauscher-Typ nach Anspruch 1, wobei
ein Innenvorsprung (54), der sich in Stapelrichtung erstreckt, auf der Oberfläche jedes Rahmenelements (22), das dem Wärmetauscherelement (21) zugewandt ist, ausgebildet ist,
der Innenvorsprung (54) an einem Endabschnitt jedes Rahmenelements (22) ausgebildet ist,
wobei zwei Innenvorsprünge auf jedem Rahmenelement (22) ausgebildet sind und
die Innenvorsprünge (54) an den Seitenflächen des Wärmetauscherelements (21) anliegen oder in die Seitenflächen des Wärmetauscherelements (21) eingreifen.

5. Belüftungsvorrichtung (100) vom Wärmetauscher-Typ nach Anspruch 1, wobei der Wärmetauscher (2) getragen wird, indem der Außenvorsprung (52) in den ersten Tragaussparungsabschnitt (25b) eingepasst ist.

## Revendications

1. Appareil de ventilation de type à échange de chaleur (100), comprenant :
un corps principal (1) dans lequel un trajet d'alimentation d'air et un trajet d'évacuation d'air sont formés, le trajet d'alimentation d'air comprenant une partie d'entrée extérieure (7a) pour admettre de l'air extérieur et une partie de sortie intérieure (7b) pour évacuer de l'air extérieur, le trajet d'évacuation d'air comprenant une partie d'entrée intérieure (8a) pour admettre de l'air intérieur et une partie de sortie extérieure (8b) pour évacuer de l'air intérieur ;
un ventilateur d'alimentation d'air (3) placé dans le trajet d'alimentation d'air ;
un ventilateur d'évacuation d'air (4) placé dans le trajet d'évacuation d'air ; et
un échangeur de chaleur (2) placé dans le corps principal (1) pour permettre un échange de chaleur entre de l'air passant à travers le trajet d'alimentation d'air et de l'air passant à travers le trajet d'évacuation d'air, dans lequel
le corps principal (1), qui est un boîtier, comprend des parties d'évidement de support (25a, 25b, 25c, 25d) formées en son sein pour supporter l'échangeur de chaleur (2) ;
l'échangeur de chaleur (2) inclut un élément d'échange de chaleur (21), des éléments de cadre (22) et des éléments de face d'extrémité (23), l'élément d'échange de chaleur (21) comprenant une pluralité d'éléments de séparation (21a) présentant chacun une forme de feuille et de polygone, les éléments de séparation (21a) étant empilés avec un espacement entre les éléments de séparation (21a), dans lequel les parties d'évidement de support (25a, 25b, 25c, 25d) sont des rainures qui s'étendent dans la direction d'empilement des éléments de séparation (21a) tels que placés dans le logement (1) ;
le ventilateur d'alimentation d'air (3) et le ventilateur d'évacuation d'air (4) sont placés l'un à côté de l'autre dans le corps principal (1) dans une direction d'empilement des éléments de séparation (21a) et viennent en butée sur un bord de l'échangeur de chaleur (2), le bord s'étendant dans la direction d'empilement,
une première partie d'évidement de support (25b) est formée dans une partie de mise en butée où le ventilateur d'alimentation d'air (3) et le ventilateur d'évacuation d'air (4) viennent en butée sur l'échangeur de chaleur (2), **caractérisé en ce que**
ladite première partie d'évidement de support (25b) inclut des saillies (33, 43) s'étendant dans la direction d'empilement et étant formées sur les surfaces de paroi interne respectives de la première partie d'évidement de support (25b),
dans lequel chacun des éléments de cadre (22) présente une forme en L dans une section et fait face à deux des surfaces latérales de l'élément d'échange de chaleur (21) qui s'étendent à partir des bords de l'élément d'échange de chaleur (21),
dans lequel la surface de chaque élément de cadre (22) opposée à la surface de celui-ci qui fait face à l'élément d'échange de chaleur (21) présente une saillie extérieure (52) formée sur celle-ci qui s'étend dans la direction d'empilement,
dans lequel chaque élément de cadre (22) couvre un bord de l'élément d'échange de chaleur (21), chaque bord s'étendant dans la direction d'empilement,
dans lequel chaque élément de cadre (22) et l'une correspondante des saillies extérieures (52) est ajusté dans l'une correspondante des parties d'évidement de support (25a, 25b, 25c, 25d), et un matériau de rembourrage (50),
dans lequel le matériau de rembourrage (50) est interposé entre chacune des parties d'évidement de support (25a, 25b, 25c, 25d) et celui correspondant des éléments de cadre (22), et
dans lequel les saillies (33, 43) sont en contact en ligne avec le matériau de rembourrage (50).

2. Appareil de ventilation de type à échange de chaleur (100) selon la revendication 1, dans lequel le ventilateur d'alimentation d'air (3) et le ventilateur d'évacuation d'air (4) incluent des boîtiers (31, 41) pouvant chacun être divisés au niveau de ladite première partie d'évidement de support (25b) en tant que centre.

3. Appareil de ventilation de type à échange de chaleur (100) selon la revendication 2, dans lequel
chacun des boîtiers (31, 41) peut être divisé en un premier boîtier (3a, 4a) qui inclut une partie d'entrée (34, 44) et un second boîtier (3b, 4b) devant être combiné avec le premier boîtier (3a, 4a),
le premier boîtier (3a) du ventilateur d'alimentation d'air (3) et le premier boîtier (4a) du ventilateur d'évacuation d'air (4) présentent une forme identique, et
le second boîtier (3b) du ventilateur d'alimentation d'air (3) et le second boîtier (4b) du ventilateur d'évacuation d'air (4) présentent une forme identique.

4. Appareil de ventilation de type à échange de chaleur (100) selon la revendication 1, dans lequel
une saillie intérieure (54) s'étendant dans la direction d'empilement est formée sur la surface de chaque élément de cadre (22) faisant face à l'élément d'échange de chaleur (21),
la saillie intérieure (54) est formée au niveau d'une partie d'extrémité de chaque élément de cadre (22),
dans lequel deux saillies intérieures sont formées sur chaque élément de cadre (22), et
les saillies intérieures (54) viennent en butée sur les surfaces latérales de l'élément d'échange de chaleur (21) ou creusent dans les surfaces latérales de l'élément d'échange de chaleur (21).

5. Appareil de ventilation de type à échange de chaleur (100) selon la revendication 1, dans lequel l'échangeur de chaleur (2) est supporté avec la saillie externe (52) ajustée dans ladite première partie d'évidement de support (25b).
